# EUROPEAN PATENT SPECIFICATION

(11) **EP 1 647 529 B1**
(45) Date of publication and mention of the grant of the patent: **30.09.2015**
(21) Application number: 03816982.7
(22) Date of filing: 22.08.2003
(51) Int. Cl.: C02F 1/72, G01D 3/08

(54) **METHOD FOR PURIFYING WASTEWATERS**
VERFAHREN ZUR REINIGUNG VON ABWÄSSERN
PROCEDE D'EPURATION DES EAUX RESIDUAIRES

(43) Date of publication of application: 19.04.2006
(73) Proprietor: PEROXYCHEM SPAIN, S.L.U., 50784 La Zaida, Zaragoza (ES)
(72) Inventor: LOPEZ MARTINEZ, Jose, M., 08174 BARCELONA (ES); PUENTE DE VERA, Fernando, 08174 BARCELONA (ES); MONREAL MUNOZ, Luis, 08174 BARCELONA (ES); VALL ESCALA, Pascual, 08174 BARCELONA (ES)
(74) Representative: Kiernan, Lisa
(86) International application number: PCT/ES2003/000433
(87) International publication number: WO 2005/019118

(56) References cited:
- EP-A- 1 157 972
- WO-A-02/04360
- WO-A-99/21801
- WO-A1-01/02105
- ES-A- 486 090
- ES-T3- 2 077 427
- US-A- 4 693 833
- US-A- 4 770 773
- US-A- 4 770 773
- US-B1- 6 576 144

## Description

### PURPOSE OF THE INVENTION

The present invention refers to a method for purifying wastewaters, by which the oxidation reaction of organic pollutants in the wastewater, by means of Fenton's reaction, is optimised.

The object of the treatments is to reduce the Chemical Oxygen Demand (COD), of the effluents by means of chemical oxidation, increasing the biodegradability.

Full automation under conditions of safety characterizes the procedure.

The procedure is in addition characterized in that the Fenton's reaction that occurs in the reactor is optimised at a given temperature and pressure and with a catalyst specially prepared to increase the efficiency of the procedure, at the same time that it minimizes adulterations and sediments.

### BACKGROUND OF THE INVENTION

The present invention refers to a procedure, equipment and reagents for purifying wastewaters, based on Fenton's reaction.

In spite of the important achievements in the search for a greater efficiency and productivity in the chemical processes involved in biodegradability, the treatment of industrial effluents containing organic pollutants is still a serious problem to be resolved.

Great concern exists in the search for economic alternatives that allow an effective degradation of the organic load and its toxicity. A specially relevant alternative is chemical treatment with agents that transform organic pollutants into innocuous compounds, carbon dioxide and water, using an oxidation process.

In 1894 Fenton discovered the oxidation of organic molecules in aqueous solution by a simultaneous aggregration of a water-soluble iron and hydrogen peroxide catalyst (Walling, c., "Fentons reagent revisited" Accounts of Chemical Research, Vol. 8, No5, 125-131(1977).

Fenton's reaction, (hydrogen peroxide in the presence of iron salts), consists in the oxidation of the orqanic material contained in effluents using hydroxyl radicals from the controlled decomposition of oxygenated water as oxidizing factor. The iron acts as activator of the hydrogen peroxide, creating hydroxyl radicals with an oxidation potential greater than permanganate.

H₂0₂ ± Fe⁺² → Fe⁺³+OH⁻± HO°

Fenton's reaction degrades the organic material into more and more simple compounds until reaching the final content of CO₂ and H₂O.

The overall reaction is the following:

CₙHₘ ± (4n+m) /2H₂O₂ →n CO₂ + (2n+m) H₂0

The stoichiometric consumption of H₂0₂ depends on the organic molecule to be oxidized that defines the chemical oxygen demand (COD). The presence in the effluent of free H₂0₂ and chlorides interferes in the COD analysis, which makes advisable the use of the TOC (Total Organic Carbon) as analysis of control.

In patent documents the purification of wastewaters using Fenton's reaction is described, as, for example, European patent with publication number EP0022525 wherein a process to diminish the chemical oxygen demand of effluents treating them with hydrogen peroxide and in the presence of a transition metal, is described.

In the Japanese patent with publication number JP56113400, a wastewater treatment that decomposes organic material is described, adding iron salts and hydrogen peroxide, and heating at 50°C-70°C for more than 60 min. Agitating, afterwards it is treated with an anionic exchange resin where the decomposed substances are absorbed.

Document DE4314521 describes a process for (dis)continuous operations to purify contaminated waters of industrial wastes with organic material, through the addition of hydrogen peroxide and a homogeneous catalyst, preferably Fenton's reagent. The reaction is carried out at 35°-40°C.

The procedure, equipment and purifying reagents of the present invention optimise the oxidation of organic pollutants in wastewaters with advantageous conditions for the treatment of flow rates that could be high.

### DESCRIPTION OF THE INVENTION

The present invention refers to a method for purifying wastewaters.

The installation has four zones that are associated with four stages, that throughout the report we will differentiate using letters; zone A, of effluent preparation, zone B of reagents preparation, zone C of reaction, zone b of neutralization and filtration.

In zone A, the effluent is collected and homogenized with agitation or recirculation, pH is adjusted, and, using two heat exchangers, an increase of temperature is produced, until obtaining that required in the reactor.

In the first effluent-effluent heat-exchanger using an economizer design, the temperature of the untreated effluents increases, at the same time that the effluent that leaves the reactor and goes to the neutralization tank reduces its temperature.

US 6576144 discloses a process for purifying waste waters, based on Fenton's reaction, comprising: treating wastewaters with hydrogen peroxide and a catalyst (Fe, Cu, EDTA) in a main reactor at a pressure between 1 to 1.5 kg/cm2, having 60 minutes residence time.

US 4770773 discloses a process wherein the Fenton reaction is conducted at ambient temperature.

US 4693833 discloses a process for decomposing organic contaminants in radioactive waste at a low temperature of 60 °C-90 °C using hydrogen peroxide in the presence of copper ions.

In zone B, the reagents, the 35% hydrogen peroxide and the catalyst specifically prepared to optimise the oxidation process, are prepared; this catalyst is made up of metal salts, orqanic acid and a complexing agent, and they will join with the effluent that comes from the zone A In the reactor supply line. The acidizing agent will be added the homogenizer tank and the alkalinizing agent to the neutralization tank to attain the required pH.

In zone C, the reactor is placed. The 35% hydrogen peroxide and the catalyst from zone B, and the effluent from zone A enter into the reactor by the supply line.

In the reactor the oxidation reaction of the organic material takes place with the hydrogen peroxide in presence of metal catalysts.

The Fenton reaction in the reactor occurs at an absolute pressure of between 1 kg/cm² and 1.5 kg/cm², and at a temperature between 110°C and 120°C.

The effluent once treated and cooled is conducted to the zone D, to a neutralization tank in which the pH increases above seven, causing the precipitation of hydroxides.

A pump sends the water from the neutralizing tank to an after filter or clarifier separating the solid waste from the treated effluent.

Safety checks are carried out automatically.

Throughout the procedure the components and conditions are selected In such a way that they don't adversely affect the operation of the reactor or violate the physical limitations of the reactor. In the procedure, all the variables that affect safety are continuously measured and operate pre-stop or emergency stop alarms.

### DESCRIPTION OF THE DRAWINGS

The present descriptive report Is supplemented with a set of drawings, illustrative and never limitative of the preferred example of the invention.

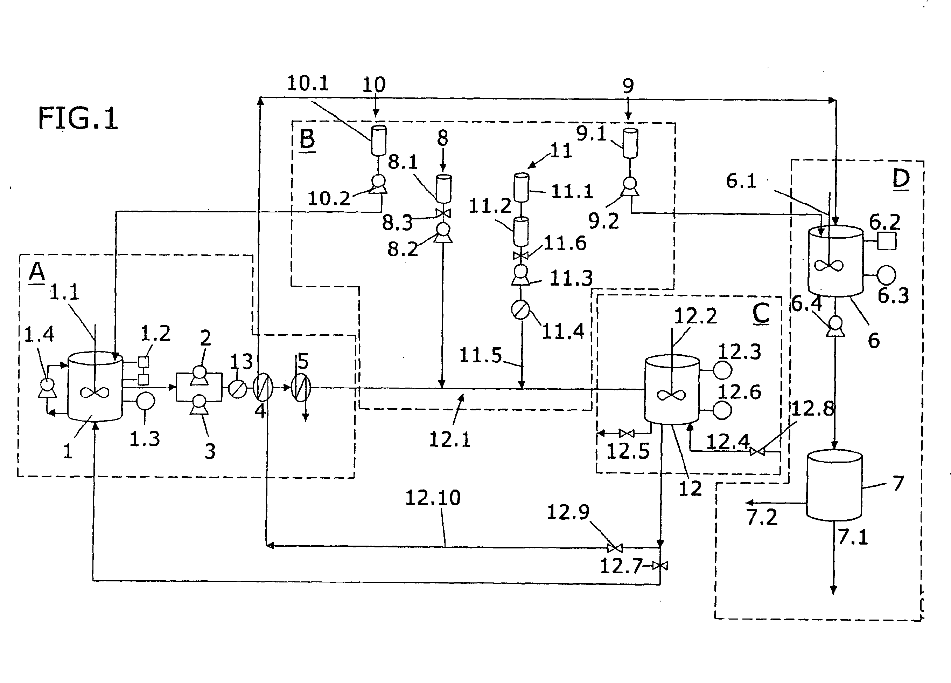

Figure 1 shows a diagram of the procedure.

### PREFERABLE EMBODIMENT OF THE INVENTION

The present invention refers to a method for purifying wastewaters, where Figure 1 shows a diagram of the method necessary to carry out treatment of waste waters, using a Fenton reaction, with a number of special conditions, always preserving conditions of safety.

The procedure is divided into four stages, A, of effluent preparation, B, of reagent preparation, C of the reaction, and D of neutralization D and filtration, that correspond with four differentiated zones, A, B, C, D, in the installation.

### Description of the installation and equipment:

The installation shows four different zones:

### Zone (A) of effluent preparation.

This is the zone where the effluent is collected In the homogenizer tank (1), where it is homogenized using an agitator (1.1), or by recirculation by means of a pump (1.4).

In the homogenizer tank (1) the first pH adjustment is carried out in a range between 2-5 adding acidizing agents from the acidizing agent storage tank (10.1), the pH control is carried out by means of a bypass (1.2) that joins two pH meters that are continually being compared, so that the pH control is redundant.

The volume of the homogenizer tank (1) must be more than three times the volume of the main oxidation reactor (12), a reactor that will be mentioned further on, in the case of the eventuality of an evacuation of the same, because of which the homogenizer tank (1) has a level gauge (1.3).

At the homogenizer tank (1) outlet the duplicated pumps (2, 3) that collect the effluent from the homogenizer tank (1), are placed, and they impel it towards the main oxidation reactor (12) to be treated. Behind the pumps a flow meter (13), that measures the rate of the flow, is located.

Before the effluent reaches the main oxidation reactor (12) it should attain the reaction temperature, that must be in an range from 110°C to 120°C. The economizer (4) causes a primary increase of temperature, to 85°C in the waters to be treated, due to the exchange of heat with the treated effluent coming from the main oxidation reactor (12) that is at 115°C, this effluent in turn' reduces the temperature, to 45°C before reaching the neutralization tank (6).

A second thermal steam or oil exchanger (5) raises the temperature of the effluent until obtaining the temperature required in the main oxidation reactor (12), a temperature that must be in the range from 110° C to 120°C, preferably 115°C,

The materials of construction of the exchangers (4 and 5) are selected from among stainless steel 904, graphite, titanium-palladium, hastelloy and inconel.

### Zone (B) of reagent preparation.

In this zone (B) is located an area (8) of H₂O₂ preparation, that Involves a H₂O₂ at 35% storage tank (8.1), a H₂O₂ supply control valve (8.3), a H₂O₂ dispensing pump (8.2) that limits the flow rate of H₂O₂ to a maximum of 10% of the working flow rate of the purifying plant; the alkalinizing agent area (9) that includes an alkalinising agent storage tank (9.1) and a dispensing pump for this alkalinizing agent (9.2); the acidizing agent area (10) that includes an acidizing agent storage tank (10.1) and a dispensing pump for this acidizing agent (10.2); and the catalyst preparation area (11) that has a polyethylene tank (11.1) for the preparation of the catalyst solution, a tank (11.2) for dispensing the catalyst solution and a catalyst solution dispensing pump (11.3), the catalyst mainly consisting of metal salts. The composition of the catalyst will be specified further on.

In the catalyst dispensing line (11.5) a flow meter (11.4) is placed, that, in the event of catalyst solution not entering into the main oxidation reactor (12), allows an initial stopping and an alarm to be produced.

The H₂0₂ and catalyst propulsion pumps (8.2, 11.3) conduct the dispensing to the main oxidation reactor (12) supply line (12.1). The alkalinizing agent pump (9.2) conducts the dispensing to the neutralization tank (6), and the acidizing agent pump (10.2) conducts the dispensing to the homogenizer tank (1).

### Zone (C) of reaction.

The main oxidation reactor (12) must ensure the sufficient residence of the reagents in its interior, and for this purpose it has a level control (12.3) that regulates the valve (12.9) located in the outlet line (12.10). The residence time in the main of oxidation reactor (12) is sixty minutes.

The main oxidation reactor (12) has a pressure control (12.6), that releases the gases and vapours generated to a bubbler.

The main oxidation reactor (12) has a steam or nitrogen line (12.4) that, in accordance with an established sequence, purges the main oxidation reactor (12), to avoid the forming of explosive mixtures and to avoid risk of distension. The nitrogen or steam inlet is controlled by an irierting valve (12.8).

The main oxidation reactor (12) has an automatic emptying valve (12.7) that opens in cases of emergency and empties the main oxidation reactor (12) into the homogenizer tank (1).

The main oxidation reactor (12) has a valve (12.9) for the control of the level of the main oxidation reactor (12).

The material of construction of the main oxidation reactor (12) can be stainless steel 904 or carbon steel enamelled in its interior, or carbon steel Teflon coated in its interior.

The water lines at a temperature greater than 60° are Teflon coated In their interior, o they are made of stainless steel 904, or they are made of titanium-palladium.

The main oxidation reactor (12) has an agitator (12.2) that starts when the level in its interior is greater than 30%. If the agitatior (12.2) of the main oxidation reactor (12) is stopped the procedure cannot work.

The effluent leaves the main oxidation reactor (12) via an outlet line (12.10) of that conducts the effluent to the economizer (4). The level of the main oxidation reactor (12) is controlled by means of an PID interlock that controls a valve (12.9) for this purpose.

### Zone D of neutralization and filtration.

The effluent once treated and cooled is conducted to the neutralization tank (6) with agitator (6.1).

In said tank the pH is increased above 7 by means of addition of NaOH or another alkalinizing agent from the alkalinizing agent storage tank (9.1), causing the precipitation of metal hydroxides. The neutralization tank (6) has a pH controller (6.2) and another for level (63).

A pump (6.4) sends the liquor from the neutralization tank (6) to a candle filter (7). After the candle filter (7) there is an outlet line (7.2) for the effluent and another outlet line (7.1) for the collection of the waste.

The separation of the effluent and the solid waste can also be carried out in a layered or static settlement tank or by using bag filtration.

The treatment limit characteristics of the effluent are:

| | |
|---|---|
| pH | indifferent |
| Flow rate, m³/h | 100 1/h up to 100 m³/h |
| Sodium sulphate, g/l | maximum 40 gm/l |
| Sodium chloride, g/l | maximum 200 gm/l |
| TOC, g/l | maximum 15 gm/L |
| COD, g/l | maximum 40 gm/l |
| H₂O₂ | maximum 40gm/l |
| Solids in suspension | maximum 500 gm/l |

For effluents whose concentration of organic material is greater than the value of 40 gm/l in COD, dilution in the homogenization tank is provided.

### Start-up.

The first step of the procedure is the system start-up, in which the different transitories are considered, until reaching normal conditions in all the equipment.

In the start-up, a series of parameters are evaluated to confirm that they are within the operating ranges. During this phase the effluent is recirculated to the homogenizer tank (1), since treatment doesn't exist. The pH should be in the working range, 3-4, and the checking of a series of parameters begins whose maladjustment determines the non-authorization for start-up, as well as the emergency stop parameters and the automatic controls of the procedure.

The alarms that prevent start-up are the levels of the different deposits and tanks, and the values of pH of the different points of the procedure:
- high homogenization tank level 60%,
- low homogenization tank level 20%,
- high neutralizer tank level 50%,
- low neutralizer tank level 10%,
- high homogenization adjustment pH 5.0,
- low homogenization adjustment pH 2.0,
- high neutralizer tank pH 9.0,
- low neutralizer tank pH 7.0.

### Parameters of interest for the control of the purifying procedure:

The emergency stop, complete stop parameters of the installation are: main oxidation reactor high temperature, (temperature greater than 125°C), high pressure of the main oxidation reactor, (pressure greater than 1.5 kg/cm²) and exceeding a maximum pre-set stop time, 600 sec.

Automatic sequence parameters that are activated in start-up: PID (Proportional Integral-Derivative) homogenizer pH control, 3.0, (regulates acid dispensing), PID temperature in the interior of the reactor 115°C, regulates the heating through the exchanger 5, PID level reactor (100%), regulates the opening of the valve 12.9, PID pressure reactor 1.0 bar, regulates the opening of the valve 12.5.

Purge temperature at start-up greater than 50°C, start-up permitted temperature, 105°C, purge in process temperature less than 110°C, low reactor temperature In sudden stop, 60°C, low reactors level, 30%.

The reactor agitator (12.2) doesn't start at a level less than 30%, preventing the main oxidation reactor (12) from operating at a lower level. At the moment that the temperature of the effluent inside the main oxidation reactor (12) surpasses 50°C, the computer control and interlocking program opens the nitrogen or steam inerting, purging valve (12.8), and the inerting is maintained until 110°C is reached.

When the go-ahead temperature for start-up (105°C) has been reached, the plant can begin purifying. For this purpose the procedure must be authorized. The dispensing of reagents, catalysts and hydrogen peroxide into the main oxidation reactor (12) supply line (12.1), begins. After thirty minutes it stops recirculating to the homogenizer tank (1) and the treated effluent is sent to the neutralization tank (6).

After successfully completing the "Start-Up" operation, it will remain in a "Plant Operating" condition. At the moment in that start-up is authorized a series of emergency pre-stop alarms are activated, that are the following:
- low reactor temperature, 100°C,
- dispensing of catalyst interrupted,
- high pH, 5.0 in the homogenization tank,
- low pH, 2.0 in the homogenization tank ,
- measurement difference between 2 pH meters,
- maximum reactor level, 95%,
- high reactor level, 90%,
- low reactor level, 30%,
- low or nil effluent flow,
- low effluent/H2O ratio, less than 8 with a concentration of H₂O₂ greater than 4.4%,
- reactor agitator stopped.

When the effluent temperature exceeds 110°C the program closes the inerting valve (12.8). Above said temperature the actual vapours generated in the effluent make the reactors inert. If the temperature drops below 110°C inerting is restarted again. If the temperature drops below 100°C the initial stop alarm due to low temperature in the main reactor (12), is activated.

### Permanent phase.

Although in this subsection each of the stages are again appraised, in this description of the permanent phase the values of the different variables and compositions that participate in the purifying procedure, will be described.

In the permanent or "Plant Operating" phase the effluent is homogenized in the homogenization tank (1) and there is a primary pH adjustment and control using a by-pass (1.2), in the range between 2-5.

The effluent increases temperature in the heat exchangers (4 and 5) until reaching a range between 110°C-120°C, preferably 115°C, and before entering into the main oxidation reactor (12), it mixes with the hydrogen peroxide and catalyst in the main oxidation reactor (12) supply line (12.1).

The effluent along with the catalyst and the hydrogen peroxide enters the main oxidation reactor (12), the oxidation reaction being carried out continuously and with the help of an agitator (12.2).

In the main oxidation reactor (12) the oxidation reaction of the organic material with the hydrogen peroxide in presence of metal catalysts, takes place. In the event of effluent not entering into the main oxidation reactor an initial stop and an alarm are produced, the non-entry of effluent is measured through a flow meter (13) located immediately before the economizer (4). If the flow of effluent drops below a preset value, determined by half of the volume of the main oxidation reactor, the plant passes from the pre-stop or initial stop status. The effluent propulsion pumps (2.3) have a nominal flow rate equal to twice the volume of the main oxidation reactor (12), preventing in this way an excessive reduction in the reaction time. A safety system exists in the interior of the main oxidation reactor (12) by means of which an upper pressure at 3.5 kg/cm², causes the opening of a safety valve acts (12.5) or rupture disk, installed for such purpose.

The temperature conditions in the main oxidation reactor (12) are in the range from 110°C to 120°C and the pressure conditions in the range of 1 kg/cm² and 1.5 kg/cm².

The formulation of the catalyst consists of the following compounds: iron II, in concentration between 2% - and 30% in the form of ferrous sulphate or ferrous chloride; copper II, in concentration between 1% - and 10% in the form of copper sulphate; organic acid, selected from between tartaric acid, oxalic acid or citric acid, in concentration of 1% up to 10%; iron complexing agents, such as EDTA and/or HDPE in concentration of 1% up to 5%; phosphoric hydrochloric or sulphuric acid, to adjust the pH until a range between 1 and 2. Said catalyst is dispensed to in a concentration from 0.01% to 1 % of the total flow rate to be treated.

The reaction temperature in the main oxidation reactor (12) is maintained using a control duplicated by PT-100 probes.

The effluent once treated in main oxidation reactor (12) and cooled in the economizer (4) to 45°C, is conducted to the neutralization tank (6). In said tank the pH is increased above 7 by means of addition of NaOH or another alkalinizing agents causing the precipitation of metal hydroxides. In the neutralization tank (6) a pH controler (6.2), that ensures that the pH range is between 7 and 9, and a level controller (6.3), are placed.

At the neutralization tank outlet, pumps (6.4) send the waters toward the filter (7) or after settlement tank.

### Normal stopping of the installation.

This stage has the purpose of safely stopping the plant and without producing untreated water. The stopping of the plant is an automated procedure. The control system executes the following actions: it closes the H₂O₂ pass valve (8.3) and the H₂O₂ dispensing pump (8.2) for the catalyst dispensing of the catalyst pump (11.5), it neutralizes the interlockings that lead to emergency pro-stop; it disables the heating interlocking; it opens the nitrogen or steam automatic purge inerting valve (12.8).

A timer is started (effluents recirculation start time) and, when the set time has elapsed, the control system diverts the effluent to the homogenisation tank (1).

When the temperature inside the main oxidation reactor (12) is less than 60°C, the following action is triggered: the reactor emptying valve (12.7) opens to 100%, the effluent pump (2 and 3) is stopped, the reactor agitator (12.2) is stopped, the reactor level controller (12.3) is disabled that leaves the valve (12.7) in manual-open position, the reactor pressure controller (12.6) is disabled that leaves the safety valve (12.5) in manual-open position, the reactor emptying valves (12.5 12.7, 12.9) remain in safe position (open), the inerting valve (12.8) automatically closes.

Safety controls are carried out automatically

In the procedure, all the variables that affect safety are continuously measured and operate pre-stop or emergency stop alarms.

### Emergency pro-stop.

This stage has the purpose of safely stopping the plant in the case of an irregular operating condition occurring, that could cause a greater risk.

There exists a series of signals that are not considered of immediate risk or are solvable in a short space of time, signals that cause initial alarms of initial stop or emergency pre-stop.

These are:
- temperature below 100°C, (below 100°C the reaction slows down), the hydrogen peroxide not reacting, with the risk of accumulation and violent decomposition that that entails,
- pH of effluents outside of range. Below pH 2 the reaction slows down, at high pH, greater than 5, a risk of precipitation of metal hydroxides exists, the oxidation reaction being inhibited, another control parameter that governs an alarm is a difference in measurement of 0.3 units between 2 pH meters. Given that the residence time of the effluents in the reactors is 60 min, an immediate adjustment of the pH of the effluents is not completely necessary. For this reason a deviation in the acceptable values of pH doesn't produce an immediate action but after a time determined by a series of timers, when the pH becomes too high or too low the Initial Stop alarms are not activated until some time has elapsed, these timers have the purpose of acting as a buffer for a short-term pH fluctuation,

- high concentration of H₂O₂, this entails a risk of supplying hydrogen peroxide of greater concentration with the possibility of creating explosive mixtures inside the reactors. The maximum concentration of hydrogen peroxide permitted is 35%, a second control of the hydrogen peroxide is by means of the H₂O₂ dispensing pump (8.2) that cannot deliver more flow than 10% of the discharge flow, the dispensing of H₂O₂ is also controlled with a control valve (8.3) and a non-return valve,
- high or low levels in reactors,
- low effluent flow rate. The treating of a low volume of effluents can be inefficient. The flow meter (13) located before the economizer (4) measures the effluent flow rate, if this is less than half of the volume of the reactor or it doesn't exist, an initial stop takes place,
- a low effluents/H₂O₂ ratio would force an excessive supply of hydrogen peroxide with the risk of formation of explosive mixtures. If this is the case, it should act diluting more the effluents,
- agitation in the homogenizer tank (1), in the neutralization tank (6), and in the reactor (12) lessens. The agitators should always have a strong agitation that avoids phase separation, which could produce explosive mixtures due to the combination of organic material and hydrogen peroxide,
- low catalyst flow rate, the absence of catalyst inhibits the reaction. If the dispensing of catalyst is interrupted, the emergency pre-stop alarm is activated,

These signals cause an "Emergency Pre-stop", this is cut-off of supply of H₂O, by the closing of a valve (8.3), cut-off of catalyst supply by closing of a valve (11.6), startup of a timer, sounding of alarm, and opening of inerting valve (12.8), and in case of the anomaly not correcting itself within a predetermined time, it produces the "Emergency Stop" action.

### Emergency stop,

The "Emergency Stop" entails that the control system passes all the valves (8.3, 11.6, 12.8, 12.5, 2.7, 12.9), pumps (2, 3, 8.2, 9.2, 10.2, 11.3, 6.4), and agitators (1.1, 12.2, 6.1), to "Safe Position"; all of these actions are intended to discharge the main oxidation reactor (12) to the homogenisation tank (1), using a rapid discharge valve (12.7) provided for such purpose, at the same time the it supply of effluent, and the dispensing of all of the reagents, Is stopped, and inerting with steam or nitrogen is activated.

An "Emergency Stop", not only happens because an anomaly that entails a Pre-stop has not been solved within a given time 600 sec., but also because the temperature of the main oxidation reactor (12) is greater than a preset value, 125°C, this high temperature in reactors can accelerate the reaction and become uncontrollable with the risks that this entails, because the pressure of the main oxidation reactor (12) is greater than a preset value, 1.5 kg/cm², an excessive pressure can be indicative of an abrupt decomposition that the system installed for such purpose is not able to evacuate, or because a push-button provided for such a purpose is manually activated, or the Emergency Stop Is activated by a control system.

A safety system exists in the interior of the main oxidation reactor (12) by means of which an upper pressure at 3.5 kg/cm², causes the opening of a safety valve (12.5) or rupture disk, installed for such purpose.

Variations in materials, form, size and disposition of the component parts, described in a non-limiting way, do not alter the essential nature of this invention, this sufficing for its reproduction to be undertaken by an expert.

## Claims

1. A method of oxidizing organic contaminants in wastewater by means of the Fenton reaction **characterized in that** such reaction takes place at an absolute pressure of between 1 kg/cm2 and 1.5 kg/cm2 and at a temperature of between 110°C and 120°G.

2. The method of claim 1 wherein such reaction takes place at 115°C.

3. The method of claim 1 wherein such reaction takes place at a pH of between 2 and 5.

4. The method of claim 1 wherein the catalyst employed in the Fenton reaction is comprised of a metal salt, an organic acid and a complexing agent.

5. The method of claim 4 wherein the metal salt is selected from the group consisting of ferrous sulfate, ferrous chloride and copper sulfate.

6. The method of claim 4 wherein the organic acid is selected from the group consisting of tartaric acid, oxalic acid and citric acid.

7. The method of claim 4 wherein the complexing agent is selected from the group consisting of EDTA and HDPE.

## Patentansprüche

1. Ein Verfahren zum Oxidieren organischer Schmutzstoffe in Abwasser mittels der Fenton-Reaktion, **dadurch gekennzeichnet, dass** eine solche Reaktion bei einem Absolutdruck von zwischen 1 kg/cm² und 1,5 kg/cm² und bei einer Temperatur von zwischen 110 °C und 120 °C stattfindet.

2. Verfahren gemäß Anspruch 1, wobei eine solche Reaktion bei 115 °C stattfindet.

3. Verfahren gemäß Anspruch 1, wobei eine solche Reaktion bei einem pH-Wert von zwischen 2 und 5 stattfindet.

4. Verfahren gemäß Anspruch 1, wobei der in der Fenton-Reaktion eingesetzte Katalysator aus einem Metallsalz, einer organischen Säure und einem Komplexbildner gebildet ist.

5. Verfahren gemäß Anspruch 4, wobei das Metallsalz aus der Gruppe ausgewählt ist, die aus Eisen(II)-sulfat, Eisen(II)-chlorid und Kupfersulfat besteht.

6. Verfahren gemäß Anspruch 4, wobei die organische Säure aus der Gruppe ausgewählt ist, die aus Weinsäure, Oxalsäure und Zitronensäure besteht.

7. Verfahren gemäß Anspruch 4, wobei der Komplexbildner aus der Gruppe ausgewählt ist, die aus EDTA und HDPE besteht.

## Revendications

1. Une méthode pour oxyder des contaminants organiques dans des eaux résiduaires au moyen de la réaction de Fenton **caractérisée en ce que** cette réaction a lieu à une pression absolue comprise entre 1 kg/cm² et 1,5 kg/cm² et à une température comprise entre 110 °C et 120 °C.

2. La méthode de la revendication 1 dans laquelle cette réaction a lieu à 115 °C.

3. La méthode de la revendication 1 dans laquelle cette réaction a lieu à un pH compris entre 2 et 5.

4. La méthode de la revendication 1 dans laquelle le catalyseur employé dans la réaction de Fenton est constitué d'un sel métallique, d'un acide organique et d'un agent complexant.

5. La méthode de la revendication 4 dans laquelle le sel métallique est sélectionné dans le groupe consistant en sulfate de fer, en chlorure de fer et en sulfate de cuivre.

6. La méthode de la revendication 4 dans laquelle l'acide organique est sélectionné dans le groupe consistant en acide tartrique, en acide oxalique et en acide citrique.

7. La méthode de la revendication 4 dans laquelle l'agent complexant est sélectionné dans le groupe consistant en EDTA et en HDPE.
